# EUROPEAN PATENT APPLICATION

(11) **EP 4 411 062 A1**
(43) Date of publication of application: **07.08.2024**
(21) Application number: 24154692.8
(22) Date of filing: 30.01.2024
(51) Int. Cl.: D06P 1/44, D06P 1/653, D06P 5/30, D06P 1/52, D06P 5/00

(54) **IMAGE FORMING METHOD AND IMAGE FORMING SYSTEM**

(30) Priority: 31.01.2023 JP 2023013614
(71) Applicant: Brother Kogyo Kabushiki Kaisha, Nagoya Aichi 467-8561 (JP)
(72) Inventor: KAWAKAMI, Takefumi, Nagoya, 467-8562 (JP)
(74) Representative: Prüfer & Partner mbB Patentanwälte · Rechtsanwälte

(57) **Abstract**

There is provided an image forming method for forming an image on a cloth material which is an absorbent base material, the image forming method including: a pretreatment liquid application step of applying an aqueous pretreatment liquid to the cloth material; and an image forming step of forming the image by discharging an aqueous ink onto the cloth material by an inkjet method after the pretreatment liquid application step, wherein in the image forming step, an amount of the pretreatment liquid maintained on the cloth material is 20 mg/cm2 or more and 150 mg/cm2 or less, and wherein the aqueous ink contains at least a white ink containing a titanium oxide particle having an average particle diameter of 20 nm or more and 200 nm or less.

## Description

### TECHNICAL FIELD

The present invention relates to an image forming method and an image forming system that forms an image on a cloth material by an inkjet method.

### BACKGROUND ART

From the related art, a method for forming an image on a cloth material by an inkjet method has been studied. Typically, for example, there has been a garment printer, which is an image forming apparatus that directly forms an image on a garment by an inkjet method or an image forming method called direct to garment (DTG) or the like.

In many inkjet type image forming methods, paper is assumed as a base material, but even when the base material is a cloth material, there is no large difference in an image forming principle. However, regardless of whether the base material is a cloth material or paper, as long as the base material is one (absorbent base material) having high absorbability, an ink discharged by the ink jet method at the time of image formation usually penetrates into the absorbent base material in a thickness direction. Therefore, before the image formation, a pretreatment liquid is applied to the cloth material, that is, a pretreatment step is performed.

It is also known that a white pigment ink is used in an ink jet type image forming method. For example, Patent Literature 1 discloses a white ink composition for ink jet textile printing containing a pigment, a fixing resin, and water, and a pretreatment liquid that aggregates a white pigment and the fixing resin in the white ink composition for ink jet textile printing. Accordingly, the fixing resin is precipitated to form a strong film.

In Patent Literature 1, examples of a white ink pigment (white pigment) include metal oxides, metal sulfates, and metal carbonates, and among them, examples of particularly preferable white pigment include titanium dioxide (titanium oxide). Further, as for a particle diameter of the white pigment, an example of a range of an average primary particle diameter is 100 nm or more and 500 nm or less, and an example of a particularly preferable range is 200 nm or more and 300 nm or less. However, a white pigment shown in Examples is only commercially available titanium oxide having an average primary particle diameter of 250 nm.

### CITATION LIST

### PATENT LITERATURE

Patent Literature 1: JP 2021-098796 A

### SUMMARY OF INVENTION

### TECHNICAL PROBLEM

It is known that the higher a refractive index of a material of the white pigment, the higher the scattering intensity, and excellent whiteness is provided to a printed matter. Titanium oxide has an extremely high refractive index among many white pigments, and is also highly safe, and thus titanium oxide is used as the white pigment in a variety of fields. However, there is a problem that titanium oxide has large specific gravity and is easily precipitated. Therefore, in order to prevent the precipitation, a use of titanium oxide having a small particle diameter as a white ink is being considered.

For example, in Patent Literature 1, as described above, a white pigment having a particle diameter of 100 nm or more and 500 nm or less is used, and in Examples, a white ink is prepared using titanium oxide particles having an average particle diameter of 250 nm. On the other hand, in recent years, a use of titanium oxide particles having a smaller average particle diameter, for example, an average particle diameter of 200 nm or less, is also being considered as a white pigment used in a white ink.

Here, it has been found that when a particle diameter of the titanium oxide particles, which are the white pigment, is made smaller, a quality of a formed white image tends to deteriorate. Specifically, as will be described later, a white ink using titanium oxide particles having a diameter of 200 nm or less can prevent precipitation of the titanium oxide particles, but there is a risk that good whiteness may not be obtained in the formed white image.

The present invention has been made in order to solve such a problem, and an object of the present invention is to provide an image forming method and an image forming system capable of achieving good whiteness in a formed white image even when a white pigment having a smaller particle diameter is used when the image is formed using a white ink using the white pigment on a cloth material by an ink jet method.

### SOLUTION TO PROBLEM

Based on the above problems, the present inventors have conducted intensive studies. The inventors of the present application have independently found that, in a case of forming an image using a white ink, an amount of a pretreatment liquid applied to the cloth material in advance contributes to achieving good whiteness at the time when the titanium oxide particles having the average particle diameter of 200 nm or less, which are contained in the white ink, adhere to the cloth material. Furthermore, the inventors of the present application have independently found that a residual amount of the pretreatment liquid not only affects the whiteness but also affects a peel property of the white image when the cloth material is pulled. The present inventors have completed the present invention based on their own findings.

In order to solve the problem, an image forming method according to the present disclosure is an image forming method for forming an image on a cloth material which is an absorbent base material, and that the image forming method includes: a pretreatment liquid application step of applying an aqueous pretreatment liquid to the cloth material; and an image forming step of forming the image by discharging an aqueous ink onto the cloth material by an inkjet method after the pretreatment liquid application step, wherein in the image forming step, an amount of the pretreatment liquid maintained on the cloth material is 20 mg/cm² or more and 150 mg/cm² or less, and wherein the aqueous ink contains at least a white ink containing a titanium oxide particle having an average particle diameter of 20 nm or more and 200 nm or less.

According to the configuration, at the time of forming the image using the white ink, the amount of the pretreatment liquid maintained (remained) on the cloth material is set within the above range. In this state, when the white ink is discharged onto the cloth material which is the absorbent base material, the titanium oxide particles as a pigment component of the white ink can be prevented or avoided from penetrating into the cloth material in the thickness direction. Therefore, the titanium oxide particles can be easily positioned on a surface of the cloth material at the time of the image formation.

Therefore, it is possible to achieve better whiteness in the white image formed on the cloth material. Moreover, even when the cloth material on which the white image is formed is pulled, it is possible to effectively prevent peeling of the white image from the cloth material.

Furthermore, since the white ink uses the titanium oxide particles having the particle diameter of 200 nm or less as a pigment, the precipitation thereof can be prevented more than a titanium oxide pigment having a normal particle diameter. Furthermore, by appropriately controlling the amount of the pretreatment liquid contained in the cloth material, it is possible to prevent the penetration into the cloth material in the thickness direction and physically fill the cloth material, and the component contained in the white ink can be aggregated well to suitably thicken the white ink. Further, when the titanium oxide particles are aggregated, aggregated particles of the titanium oxide particles can be relatively enlarged (the particle diameter can be increased). Accordingly, whiteness of the aggregated particles can be improved.

The image forming method may further include: before the image forming step, a clear ink application step of applying an aqueous clear ink that does not contain a color material but contains a resin component, wherein an application amount of the clear ink to the absorbent base material is within a range of 3 mg/cm² to 20 mg/cm².

The image forming method may be configured that the clear ink application step is performed after the pretreatment liquid application step.

The image forming method may be configured that, in the image forming step, an lower limit of the amount of the pretreatment liquid maintained in the absorbent base material without heating is 40 mg/cm² or more.

The image forming method may be configured that, in the image forming step, the amount of the pretreatment liquid maintained in the absorbent base material without heating is 40 mg/cm² or more and 130 mg/cm² or less.

The image forming method may be configured that, the titanium oxide particle has an average particle diameter of 150 nm or less.

The image forming method may be configured that, the titanium oxide particle has an average particle diameter of 120 nm or less.

The image forming method may be configured that, the titanium oxide particle has an average particle diameter of 50 nm or more and 120 nm or less.

The image forming method may be configured that, the resin component contained in the clear ink is a resin particle.

The image forming method may be configured that, the absorbent base material is a cloth material containing polyester.

The image forming method may be configured that, the pretreatment liquid contains an organic acid.

An image forming system according to the present disclosure includes: a pretreatment liquid application unit configured to apply an aqueous pretreatment liquid to a cloth material; and an image forming unit configured to form an image by discharging an aqueous ink to the cloth material to which the pretreatment liquid is applied by an ink jet method, wherein the aqueous ink contains at least a white ink containing a titanium oxide particle having an average particle diameter of 20 nm or more and 200 nm or less, and wherein the pretreatment liquid application unit applies the pretreatment liquid to the cloth material such that an amount of the pretreatment liquid maintained on the cloth material is 20 mg/cm² or more and 150 mg/cm² or less at the time of the image formation.

The image forming system may be configured that the image forming unit applies, before the image is formed on the cloth material, an aqueous clear ink that does not contain a color material but contains a resin component to the cloth material in a range of 3 mg/cm² to 20 mg/cm².

The present disclosure also includes cloth material on which the image is formed by the image forming method as described above.

### ADVANTAGEOUS EFFECTS OF INVENTION

The present invention has an advantage in which an image forming method and an image forming system capable of achieving, even when a white pigment having a smaller particle diameter is used, good whiteness in a formed white image while preventing precipitation of the white pigment when the image is formed using a white ink using the white pigment on a cloth material by an inkjet method with the above configuration can be provided.

### BRIEF DESCRIPTION OF DRAWINGS

FIG. 1 is a schematic plan view illustrating a schematic configuration of an ink jet type image forming apparatus used in an image forming method according to a representative embodiment of the present disclosure.
FIG. 2 is a schematic plan view showing a schematic configuration of a discharge head mounted on a carriage of the image forming apparatus shown in FIG. 1.
FIG. 3A to FIG. 3C are schematic plan views showing configuration examples in each of which a pretreatment liquid is applied before image formation performed by the image forming apparatus shown in FIG. 1.
FIG. 4 is a schematic view including sections (A) to (C) which are schematic plan views showing other schematic configurations of the discharge head mounted on the carriage of the image forming apparatus shown in FIG. 1.
FIG. 5A is a process diagram schematically illustrating a process of forming a white image on a cloth material by the image forming method according to the present disclosure, and FIG. 5B is a process diagram schematically illustrating a process of forming a white image on a cloth material by an image forming method according to a comparative example.

### DESCRIPTION OF EMBODIMENTS

Hereinafter, a representative embodiment of the present invention will be described with reference to the drawings. Hereinafter, the same or corresponding elements are denoted by the same reference numerals in all the drawings, and a repeated description thereof is omitted.

### [Example of Ink Jet Type Image Formation]

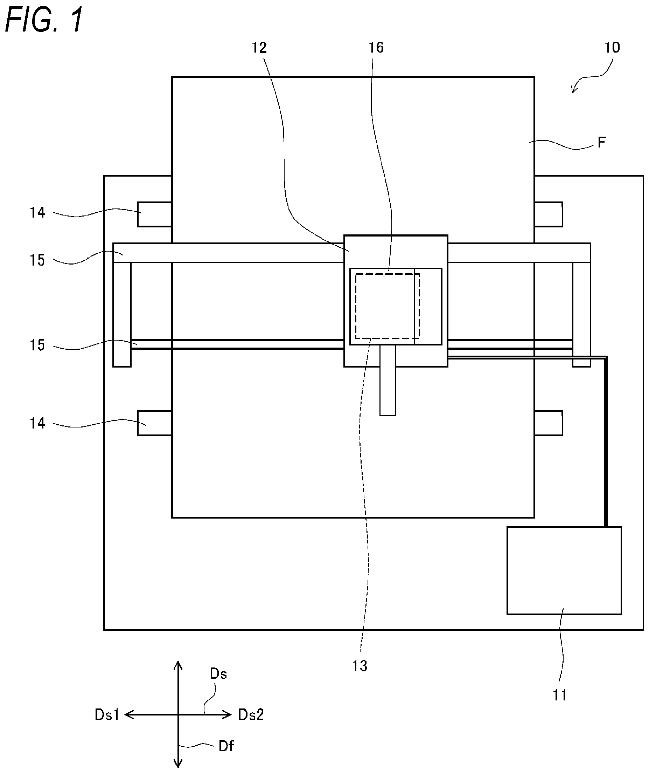

A specific configuration of an inkjet type image forming apparatus used in an image forming method according to the present disclosure is not particularly limited. Examples of a representative image forming apparatus include an ink jet type garment printer shown in FIG. 1, and an inkjet type image formation will be described.

As shown in FIG. 1, the ink jet type garment printer 10 according to the present embodiment discharges at least an ink onto a cloth material that is a base material, and includes a storage tank 11, a carriage 12, a discharge head 13, a pair of conveying rollers 14, a pair of guide rails 15, and a sub-tank 16. A cloth material 30 is placed on a platen (not shown) in the garment printer 10 as a base material (printing medium) on which an image is formed (printed).

The discharge head 13 indicated by a broken line in FIG. 1 is mounted on the carriage 12. The carriage 12 is supported by the pair of guide rails 15 extending in a movement direction Ds orthogonal to a conveyance direction Df of the cloth material 30, and reciprocates in the movement direction Ds along the guide rails 15. Accordingly, the discharge head 13 reciprocates in the movement direction Ds.

A control device of the garment printer 10 moves the carriage 12 at a predetermined speed while causing the discharge head 13 to discharge ink droplets. Further, a plurality of sub-tanks 16 are mounted on the carriage 12. Each of the sub-tanks 16 is connected to the corresponding storage tank 11 via a tube (ink flow path). In FIG. 1, for convenience of illustration, the sub-tank 16 is schematically shown as a single structure.

The pair of conveying rollers 14 are arranged parallel to each other along the movement direction Ds. The conveying roller 14 is rotated by a drive of a conveyance motor, whereby the cloth material 30 on the platen is conveyed in the conveyance direction Df.

The ink is stored in the storage tank 11. The storage tank 11 is connected to the discharge head 13 via the sub-tank 16 and a tube. Further, the storage tank 11 is provided for each type of ink. In FIG. 1, for convenience of illustration, the storage tank 11 is schematically illustrated as a single structure like the sub-tank 16, and in the present embodiment, for example, five storage tanks 11 are present. Specifically, there are five tanks that store inks of respective colors, that is, white ink, black, yellow, cyan, and magenta.

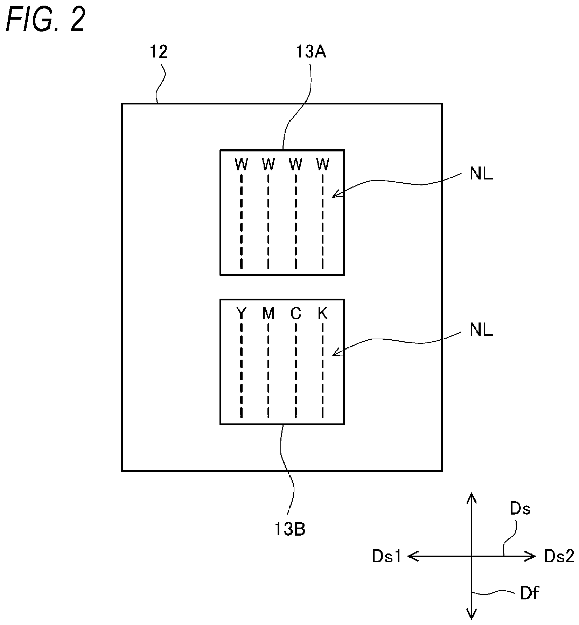

In the present embodiment, for example, as shown in FIG. 2, two discharge heads 13A and 13B are mounted on the carriage 12. The discharge head 13A and the discharge head 13B are arranged along the conveyance direction Df. The discharge head 13B is disposed, for example, in front of the discharge head 13A. During a first scan in the image forming process, the carriage 12 moves to the right in the movement direction Ds (or to the other direction Ds2 in the movement direction Ds).

Accordingly, the discharge heads 13A and 13B move to the right during the image forming process. In this case, the discharge head 13 discharges the ink droplets onto the cloth material 30 while moving to the right in the movement direction Ds. In the image forming process, an operation of conveying the cloth material 30 in the conveyance direction Df and an operation of discharging the ink droplets while moving the discharge head accordingly are alternately repeated.

The discharge head 13A discharges ink droplets of a white ink (W). In the discharge head 13A, nozzle rows NL that discharge the ink droplets of the white ink are formed along the conveyance direction Df. In an example shown in FIG. 2, four nozzle rows NL that discharge the ink droplets of the white ink are formed in the discharge head 13A at regular intervals in the movement direction Ds. The nozzle row NL that discharges the ink droplets of the white ink is not particularly limited, and may be, for example, two rows or one row.

On the other hand, the discharge head 13B discharges ink droplets of yellow (Y), magenta (M), cyan (C), and black (K), which are sometimes collectively referred to as a color ink. In the discharge head 13B, the nozzle rows NL that discharge respective ink droplets are formed along the conveyance direction Df. The nozzle rows NL are formed at regular intervals in the movement direction Ds.

In the example shown in FIG. 2, an arrangement order in the movement direction Ds of the nozzle rows NL in the discharge head 13B is, but not limited to, a nozzle row NL that discharges the yellow ink droplets, a nozzle row NL that discharges the magenta ink droplets, a nozzle row NL that discharges the cyan ink droplets, and a nozzle row NL that discharges the black ink droplets in the other direction Ds2 of the movement direction Ds.

In the present embodiment, a color image is printed on the cloth material 30 by discharging the ink droplets of five colors onto the cloth material 30. In particular, in the present disclosure, when the color image is printed on the cloth material 30, in order to reduce an influence on a color of the cloth material 30 and a material of the cloth material 30, the white ink droplets are discharged first as a base ink, and a white image is formed first. The ink droplets of the color inks are discharged onto the white image formed on the cloth material 30.

In the image forming method according to the present disclosure, as will be described later, a pretreatment liquid is applied to the cloth material 30 as the base material before the white image is formed. By applying the pretreatment liquid to an image forming surface (printing surface) of the cloth material 30, it is possible to form a good image on the cloth material 30 by preventing, avoiding, or preventing a phenomenon such as penetration of the white ink or the color ink into the cloth material 30 and penetration of the inks into a joint or the like of the cloth material 30.

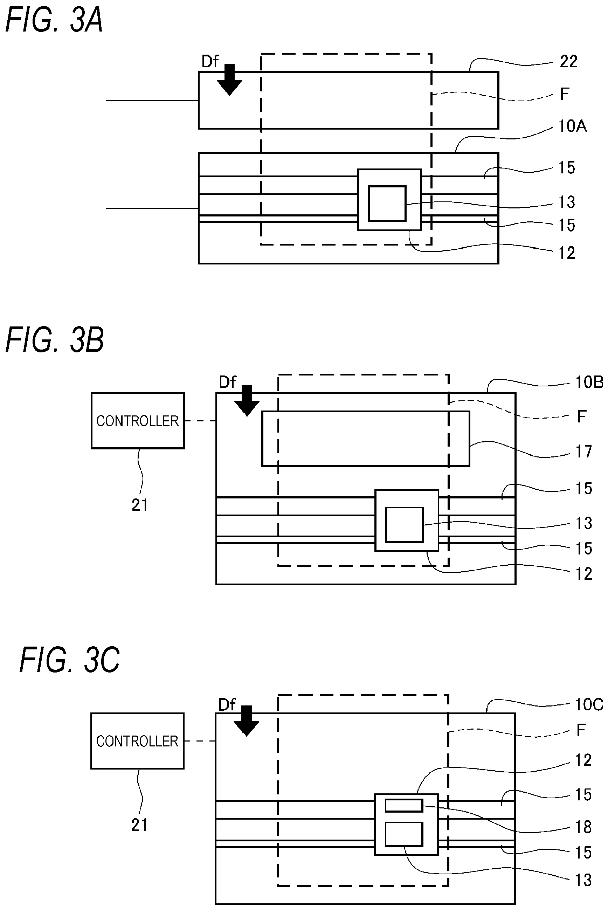

In the present embodiment, a specific configuration in which the pretreatment liquid is applied to the cloth material 30 is not particularly limited. For example, as shown in FIG. 3A, it is possible to adopt a configuration including a garment printer 10A and a pretreatment liquid application device 22.

The garment printer 10A has the same configuration as the garment printer 10 illustrated in FIG. 1, and only the carriage 12, the discharge head 13, and the guide rails 15 are schematically illustrated in FIG. 3A. Further, in FIG. 3A, the conveyance direction Df of the cloth material 30 is indicated by a black block arrow. As a configuration independent of the garment printer 10A, the pretreatment liquid application device 22 is located upstream in the conveyance direction Df as viewed from the garment printer 10A.

In FIG. 3A, the cloth material 30 is illustrated by a broken line, the cloth material 30 is first conveyed to the pretreatment liquid application device 22 along the conveyance direction Df, and the pretreatment liquid is applied to the image forming surface of the cloth material 30. Thereafter, the cloth material 30 is further conveyed along the conveyance direction Df and conveyed to the garment printer 10A, the white ink is further applied on the image forming surface coated with the pretreatment liquid to form the white image, and then a desired image is formed on the cloth material 30 by applying the color ink.

In the configuration illustrated in FIG. 3A, an example in which the garment printer 10A and the pretreatment liquid application device 22 constitute one image forming system via a network is illustrated. In the image forming system, for example, the garment printer 10A may include a controller that controls an entire system, or may include independent control devices that respectively control the garment printer 10A and the pretreatment liquid application device 22.

FIG. 3A is only a schematic diagram. In the example described above, the pretreatment liquid application device 22 and the garment printer 10A are located on the same conveyance path, and the application of the pretreatment liquid and the application of the white ink or the like are continuously performed on the cloth material 30, but the present disclosure is not limited thereto. For example, the pretreatment liquid application device 22 and the garment printer 10A may be independent liquid application devices. For example, an application step of the pretreatment liquid performed by the pretreatment liquid application device 22 and an application step of the white ink performed by the garment printer 10A may be continuous by sharing the conveyance path as described above, or may be performed as steps independent of each other.

A specific configuration of the pretreatment liquid application device 22 is not particularly limited, and a known application method can be suitably used. Specific examples of the application method include a spray coating method, a blade application method, a roll coating method, an ink jet method, and an immersion processing method (a method of immersing the cloth material 30 in the pretreatment liquid and then squeezing the cloth material 30 with a mangle roll). From the viewpoint of continuously performing the application step of the pretreatment liquid and the application step of the white ink or the color ink, an ink jet method may be adopted.

The application of the pretreatment liquid performed by the pretreatment liquid application device 22 may be performed on the entire image forming surface of the cloth material 30. Alternatively, depending on various conditions such as a size or a shape of the formed image, a shape or a type of the cloth material 30, the pretreatment liquid may be applied only to a region (region where the color ink is applied) where the image is formed on the cloth material 30. In the former case, a spray coating method, a blade application method, a roll coating method, an immersion processing method, or the like can be suitably adopted. In the latter case, an inkjet method can be suitably adopted.

In the configuration example shown in FIG. 3A, although the garment printer 10A and the pretreatment liquid application device 22 have independent configurations, the present disclosure is not limited thereto, and may have an integrated configuration.

For example, as shown in FIG. 3B, the garment printer 10B includes an inkjet type image forming unit (storage tank 11, carriage 12, discharge head 13, guide rail 15, and the like) similarly to the garment printer 10 shown in FIG. 1 (or the garment printer 10A shown in FIG. 3A), and further includes a pretreatment liquid application unit 17. In a configuration illustrated in FIG. 3B, a controller 21 that controls the image forming unit, the pretreatment liquid application unit 17, and the like is also illustrated as a schematic block.

When viewed from the carriage 12, the discharge head 13, the guide rail 15, and the like (image forming unit), the pretreatment liquid application unit 17 is located upstream in the conveyance direction Df (black block arrow in the figure) of the cloth material 30 (broken line in the figure), and is accommodated within a housing of the garment printer 10B. Therefore, in the garment printer 10B, the ink jet type image forming unit (ink application step) and the pretreatment liquid application unit 17 (pretreatment liquid application step) are integrated.

A specific configuration of the pretreatment liquid application unit 17 is not particularly limited, and may be any configuration as long as the pretreatment liquid application unit 17 can perform a known application method such as a spray coating method, a blade application method, a roll coating method, an ink jet method, or an immersion processing method, similarly to the pretreatment liquid application device 20 described above. For example, when the pretreatment liquid application device 20 is an ink jet type pretreatment liquid application device, the ink jet type pretreatment liquid application unit 17 that applies the pretreatment liquid is located upstream in the conveyance direction Df, and the inkjet type image forming unit that applies the white ink and the color ink is located downstream in the conveyance direction Df.

If the pretreatment liquid application step is performed by the ink jet method, as shown in FIG. 3C, the garment printer 10C may have a configuration in which the carriage 12 includes the discharge head 13 for the ink application and the discharge head 18 for the pretreatment liquid application. In a configuration illustrated in FIG. 3C, the controller 21 that controls the image forming unit (including the discharge head 13 for the ink application and the discharge head 18 for the pretreatment liquid application) and the like is also illustrated as a schematic block.

In the configuration shown in FIG. 3C, in addition to the storage tank 11 for the ink, the sub-tank 16, and the tube connecting the storage tank 11 and the sub-tank 16, the storage tank 11 for the pretreatment liquid, the sub-tank 16, the tube, and the like may be provided. Alternatively, for example, when there is no discharge head 18, a part of the plurality of nozzle rows NL for the white ink provided in the discharge head 13A illustrated in FIG. 2 may be replaced with a nozzle row NL that discharges the pretreatment liquid.

Although not specifically shown in FIG. 1 or FIGS. 3A to 3C, the garment printers 10 and 10A to 10C may be provided with a configuration for performing a known post-processing in the field of forming the image on the cloth material 30. Alternatively, similarly to a combination of the garment printer 10A and the pretreatment liquid application device 22 shown in FIG. 3A, an independent configuration (post-processing device) for performing the post-processing may be used in combination.

In the image forming method according to the present disclosure, as will be described later, after the pretreatment liquid is applied to the cloth material 30 which is the base material, a clear ink may be applied before the white image is formed. By applying the clear ink after applying the pretreatment liquid to the image forming surface (printing surface) of the cloth material 30, whiteness of the white image formed on the cloth material 30 can be further improved.

A specific configuration for applying the clear ink is not particularly limited. As will be described below, a composition of the clear ink may or may not be the same as the composition of the white ink, except that the clear ink does not contain a white pigment (titanium oxide particles). Therefore, the clear ink may be applied to the cloth material 30 by an ink jet method like the white ink.

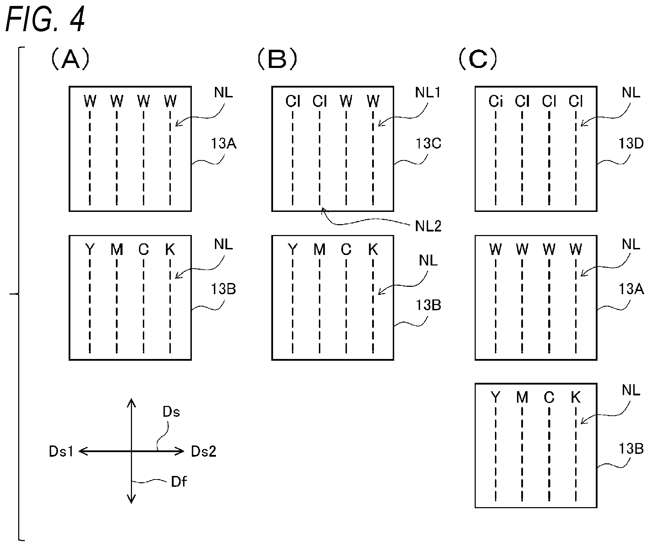

For example, the discharge heads 13A and 13B shown in section (A) of FIG. 4 have the same configuration as the discharge heads 13A and 13B shown in FIG. 2, a plurality of nozzle rows NL that discharge the white ink are formed in the discharge head 13A, and a plurality of nozzle rows NL that discharge the color ink are formed in the discharge head 13B.

In contrast, in discharge heads 13C and 13B illustrated in section (B) of FIG. 4, a part of the nozzle rows NL that discharge the white ink, which is provided in the discharge head 13A illustrated in section (A) of FIG. 4, is replaced with a nozzle row NL that discharges the clear ink. For convenience of illustration, in section (B) of FIG. 4, a nozzle row NL that discharges the white ink is referred to as a nozzle row NL1, and a nozzle row NL that discharges the clear ink is referred to as a nozzle row NL2. In this configuration, in the discharge head 13C, the clear ink is first discharged from the nozzle row NL1, and then the white ink is discharged from the nozzle row NL2.

Alternatively, in discharge heads 13D, 13A, and 13B illustrated in section (C) of FIG. 4, the discharge head 13A that discharges the white ink and the discharge head 13B that discharges the clear ink are the same as those in section (A) of FIG. 4 and FIG. 2, but the discharge head 13D further includes a nozzle row NL that discharges the clear ink. In this configuration, the clear ink is discharged from the discharge head 13D, and then the white ink is discharged from the discharge head 13A.

Furthermore, for example, it is also possible to adopt a configuration in which a clear ink application unit is provided upstream in the conveyance direction Df as viewed from the discharge heads 13A and 13B shown in section (A) of FIG. 4, or a clear ink application device is provided separately from the garment printer 10. The former configuration (clear ink application unit) may be a configuration in which the above-described known application method can be performed and provided in the garment printer 10A, similar to the pretreatment liquid application unit 17 in the garment printer 10B shown in FIG. 3B. The latter configuration (clear ink application device) may be a configuration in which the above-described known application method can be performed similarly to the pretreatment liquid application device 22 shown in FIG. 3A, and may be an application device independent of the garment printer 10A.

### [Pretreatment Liquid]

In the image forming method according to the present disclosure, as described above, the pretreatment liquid is applied to the image forming surface (printing surface) of the cloth material 30 before the white image is formed (printed) on the cloth material 30 with the white ink. A specific configuration of the pretreatment liquid used in the present disclosure is not particularly limited, and any liquid may be used as long as the liquid contains a compound that thickens or aggregates the white ink by interacting with components in the white ink.

The titanium oxide particles are fine powders (fine particles) and are not dissolved in a general solvent. Accordingly, the white ink is in a form of dispersion or suspension in which the titanium oxide particles are dispersed in a solvent. In order to cause such a white ink to hardly penetrate into the cloth material 30, a representative method is to aggregate the titanium oxide particles, which are a color material of the white ink.

Therefore, in the present embodiment, the compound that thickens or aggregates the white ink is referred to as an "aggregating agent" for convenience. In the present embodiment, the pretreatment liquid contains at least an aggregating agent having an action of aggregating the titanium oxide particles. The aggregating agent in the present disclosure is not limited to the compound that aggregates the titanium oxide particles, but may also be a compound that aggregates (or thickens or insolubilizes) other components contained in the white ink.

As will be described later, in the present disclosure, when the image is formed on the cloth material 30, a residual amount of the pretreatment liquid is set within a predetermined range, and thus when the white ink is discharged onto the cloth material that is an absorbent base material, it is possible to prevent or avoid the penetration of the titanium oxide particles, which are a pigment component of the white ink, into the cloth material in the thickness direction. Therefore, the titanium oxide particles can be easily positioned on a surface of the cloth material at the time of the image formation.

Specific examples of the aggregating agent include, but are not limited to, known acids, polymers, and metal salts. In particular, in the present disclosure, an organic acid is preferably used as the aggregating agent. Specific examples of the organic acid include, but are not limited to, organic compounds having a relatively low-molecular carboxy group (carboxyl group) in a molecular structure, which can be removed when the white image is heated and fixed.

Specific examples of the organic acid include, but are not particularly limited to, formic acid; saturated fatty acids such as acetic acid, propionic acid, butyric acid, and valeric acid; hydroxy acids such as lactic acid, malic acid, and citric acid; aromatic carboxylic acids such as benzoic acid, phthalic acid, isophthalic acid, terephthalic acid, salicylic acid, and gallic acid; dicarboxylic acids such as oxalic acid, malonic acid, succinic acid, and fumaric acid; uronic acids such as glucuronic acid, galacturonic acid, and iduronic acid; and ascorbic acid. These organic acids may be salts in which a cation is not a metal ion (for example, an ammonium salt or an amine salt).

These organic acids may be used alone or in an appropriate combination of two or more thereof. Among them, volatile organic acids such as formic acid, acetic acid, lactic acid, and propionic acid have an advantage that the volatile organic acids easily evaporate when the white image is heated and fixed and are less likely to remain on the cloth material after the fixing. Alternatively, an organic acid which has low evaporability but is easily decomposed by the heating can be suitably used. In Examples to be described later, formic acid is used as the aggregating agent.

Since the pretreatment liquid used in the present disclosure is aqueous, at least water is used as the solvent. The water used as the solvent may have relatively high purity. Generally, ion exchanged water, ultrafilter water, reverse osmosis water, distilled water, and the like can be used. The water having high purity may be pure water (electrical resistivity at 25°C is about 0.1 MΩ·cm to 1.5 MΩ·cm) or ultrapure water (electrical resistivity at 25°C is 10 MΩ·cm or more).

As the aggregating agent, in addition to the organic acid, a polyvalent metal salt or a cationic compound can be used. However, in the image forming method according to the present disclosure, in order to prevent the aggregating agent from remaining on the cloth material after the fixing, an aggregating agent that is easily evaporated during the heating and fixing of the ink image is suitably used. From this viewpoint, in the present disclosure, the organic acid is suitably used as the aggregating agent.

In the pretreatment liquid used in the present disclosure, a content of the aggregating agent is not particularly limited, but as a representative content, a lower limit of the aggregating agent may be 0.01% by mass or more, and may be 0.1% by mass or more, or may be 0.5% by mass or more, when a total amount of the pretreatment liquid containing the aggregating agent and the water is 100% by mass. An upper limit of the content of the aggregating agent may be 10% by mass or less, may be 5% by mass or less, or may be 3% by mass or less.

The pretreatment liquid used in the present disclosure may contain an organic solvent other than water. A drying level of the pretreatment liquid can be adjusted by blending the organic solvent in the pretreatment liquid. A specific organic solvent is not particularly limited, and may be a water-soluble organic solvent since a main solvent is water.

Specific examples of the water-soluble organic solvent include lower alcohols such as methanol, ethanol, 1-propanol (n-propyl alcohol), 2-propanol (isopropyl alcohol, IPA), 1-butanol (n-butyl alcohol), 2-butanol (sec-butyl alcohol), 2-methyl-1-propanol (isobutyl alcohol), and 2-methyl-2-propanol (tert-butyl alcohol); polyhydric alcohols such as glycerol (glycerin), trimethylolpropane, and trimethylolethane; alkylene glycols such as ethylene glycol, propylene glycol, butylene glycol, diethylene glycol, triethylene glycol, dipropylene glycol, tripropylene glycol, thiodiglycol, and hexylene glycol, or polyethers; amides such as dimethylformamide, diethylformamide, dimethylacetamide, 2-pyrolidone, and N-methyl-2-pyrolidone; ketones such as acetone, methyl ethyl ketone, diethyl ketone, cyclohexanone; ketoalcohols such as diacetone alcohol; ethers such as tetrahydrofuran and dioxane; and 1,3-dimethyl-2-imidazolidinone (DMI). These water-soluble organic solvents may be used alone or in an appropriate combination of two or more thereof.

A method for producing the pretreatment liquid used in the present disclosure is not particularly limited, and as for the production method, an aggregating agent and water which are essential components, and other components (organic solvent and the like) as necessary may be blended in a predetermined ratio and stirred and mixed by a known method. Examples of other components that may be contained in the pretreatment liquid include various additives such as a thickening agent in the organic solvent.

### [White Ink and Clear Ink]

In the image forming method according to the present disclosure, as described above, the pretreatment liquid is applied to the image forming surface (printing surface) of the cloth material 30, and then the white image is formed (printed) with the white ink. A specific configuration of the white ink used in the present disclosure is not particularly limited as long as the white ink is an aqueous ink containing a titanium oxide (TiO₂) pigment as a color material.

In the image forming method according to the present disclosure, the clear ink may be applied to the image forming surface (printing surface) of the cloth material 30 after the pretreatment liquid is applied and before the white ink is applied. That is, in the image forming method according to the present disclosure, the white image may be formed by applying the clear ink on the pretreatment liquid applied to a surface of the cloth material 30, and then applying the white ink on the clear ink.

Compositions of the white ink and the clear ink may or may not be the same except that the clear ink does not contain the titanium oxide particles. The term "the same composition" as used herein means that the same or different types of components in the same category can be used as each component such as a solvent and a resin component to be described later, and contents thereof may be the same or different as long as the contents are within a suitable range. Examples of the different compositions include an example in which one of the white ink and the clear ink contains a urethane resin as a resin component and the other contains an acrylic resin. In the present embodiment, the white ink and the clear ink are collectively described.

A specific configuration of the titanium oxide particles contained in the white ink as the color material is not particularly limited, and an average particle diameter thereof may be within a predetermined range. Regarding a representative average particle diameter (average primary particle diameter) of the titanium oxide particles, for example, a lower limit thereof may be 20 nm or more, 30 nm or more, or 50 nm or more. On the other hand, an upper limit of the average particle diameter of the titanium oxide particles may be 200 nm or less, may be 180 nm or less, 150 nm or less, or 120 nm or less.

When the average particle diameter of the titanium oxide particles is 10 nm or less, improvement of a precipitation property can be expected, but since a particle diameter is extremely smaller than a wavelength of visible light, Mie scattering hardly occurs. Therefore, it is considered that the white ink is almost colorless in the state of the dispersion, and the whiteness of the formed white image is significantly reduced. On the other hand, when the average particle diameter of the titanium oxide particles is 200 nm or more, a precipitation speed is high, and thus the titanium oxide particles are more easily precipitated. The average particle diameter of the titanium oxide particles in the present embodiment is typically in a range of 50 nm or more and 120 nm or less.

A method for measuring the average particle diameter of the titanium oxide particles is not particularly limited, and a known method for measuring an average particle diameter of nano-level fine particles can be suitably used, but in the present disclosure, as described in Examples to be described later, a method is used in which scattered light intensity is measured using a dynamic scattering type particle size distribution measuring device, and the average particle diameter is calculated using the photon correlation method based on the intensity.

The white ink used in the present disclosure may contain a color material other than the titanium oxide particles, for example, other white pigments, if necessary. Since the titanium oxide particles generally have a good refractive index, the titanium oxide particles can achieve good whiteness compared to other white pigments. However, from the viewpoint of forming a suitable white image as a base layer on the image forming surface of the cloth material 30, another white pigment may be blended to some extent with the titanium oxide particles. Examples of the other white pigment include zirconium oxide, zinc sulfide, zinc oxide, barium sulfate, anhydrous calcium silicate, talc, chalk, alumina white, and silica.

A solvent of the white ink or the clear ink used in the present disclosure may be water similarly to the pretreatment liquid described above. The water used as the solvent may be any water as long as the water has relatively high purity as described above, and examples thereof generally include ion exchanged water, ultrafilter water, reverse osmosis water, and distilled water. As described above, the water having high purity may be pure water or ultrapure water.

In the white ink used in the present disclosure, a content of the titanium oxide particles (or all the white pigments including the titanium oxide particles) is not particularly limited, but regarding a representative content, when a total amount of the white ink containing the titanium oxide particles and water is 100% by mass, a lower limit of the titanium oxide particles may be 1% by mass or more, may be 3% by mass or more, or may be 5% by mass or more. Further, the upper limit of the content of the titanium oxide particles may be 20.0% by mass or less, may be 15.0% by mass or less, and may be 13.0% by mass or less.

When the content of the titanium oxide particles is less than 5.0% by mass, the white ink may become too thin, and the good white image cannot be formed even if the white ink is applied after the pretreatment liquid is applied. On the other hand, when the content of the titanium oxide particles exceeds 20.0% by mass, the white ink may become too dark, resulting in an unnecessarily high viscosity or a decrease in discharge stability from the discharge head 13.

The white ink or the clear ink used in the present disclosure may further contain the resin component. A specific configuration of the resin component is not particularly limited, and the resin component may be in a state of being dissolved in the solvent in the white ink or the clear ink, or may be in a state of being dispersed as resin particles.

A specific material of the resin component contained in the white ink and the clear ink is not particularly limited, and examples thereof include known resins usable in general ink jet inks. By blending such a resin component, for example, good fixability can be imparted when the white ink or the clear ink is applied to the cloth material 30.

Specific examples thereof include hydrophilic resins such as an acrylic resin (including not only a polyacrylate based resin but also a polymethacrylate based resin), a crosslinked acrylic resin, a vinyl acetate resin, a phenol resin, a urethane resin, a copolymer thereof; hydrophobic or non-hydrophilic resins such as a vinyl chloride resin, a styrene resin, a crosslinked styrene resin, a silicone resin, an epoxy resin, a polyester resin, a butadiene resin, a paraffin resin (resin in which a main component is paraffin refined from mineral oil), a guanamine resin (benzoguanamine resin and the like), a fluororesin, and a copolymers thereof; and water-soluble resins such as polyvinyl alcohol, polyacrylamide, and carboxy methyl cellulose. These resins may be used alone as the resin component or in an appropriate combination of two or more thereof as the resin component.

Among the resins described above, examples of the material of a representative resin component include a hydrophilic resin and a water-soluble resin. The resin component may be a hydrophobic resin or a non-hydrophilic resin imparted with hydrophilicity or water solubility by introducing a hydrophilic group.

More specific examples of the material of the resin component include a urethane resin (polyurethane or a derivative thereof or a copolymer thereof). The urethane resin can be suitably used as a component of the white ink or the clear ink particularly disclosed in the present disclosure since a flexible and tough film structure can be generally formed when the urethane resin is applied to the base material as the dispersion, for example. In Examples to be described below, resin particles made of a commercially available aqueous urethane resin (PUD) are also used.

In the present disclosure, the white ink does not necessarily contain the resin component, but the clear ink contains the resin component. When the clear ink contains the resin component, a layer for filling can be formed when the clear ink is applied to the cloth material. When the white ink contains the resin component, a content of the resin component or a content of the resin component in the clear ink is not particularly limited. As a representative content, when a total amount of the white ink or the clear ink is 100% by mass, a lower limit of the content of the resin component may be 1.0% by mass or more, and may be 5.0% by mass or more. An upper limit of the content of the resin component may be 30.0% by mass or less, may be 20.0% by mass or less, or may be 12.0% by mass or less.

When the content of the resin component is less than 1.0% by mass, an operation and effect of blending the resin component may not be sufficiently achieved although depending on various conditions. On the other hand, when the content of the resin component is more than 30.0% by mass, viscosity of the white ink or the clear ink may be excessively increased or the discharge from the discharge head 13 may be affected.

In the present disclosure, a form of the resin component contained in the white ink or the clear ink is not particularly limited. In the present embodiment, a representative example is a form of resin particles. A specific particle diameter of the resin particles is not particularly limited, and can be appropriately selected depending on various conditions. A typical particle diameter for dispersion or suspension of the resin particles includes, for example, a volume average particle diameter MV measured using a particle size analyzer (Micro Track Series manufactured by MicrotracBEL Corp.). Regarding a representative range of the volume average particle diameter of the resin particles, for example, a lower limit may be 10 nm or more, or may be 20 nm or more. An upper limit may be 500 nm or less, may be 200 nm or less, may be 100 nm or less, or may be 50 nm or less.

A specific configuration of the resin particles is not particularly limited. For example, the resin particles may be formed by using only one type of the known resins described above, or may be formed by combining two or more types of the resins described above. Here, the case in which the resin particles are formed by combining two or more types of resins includes a case in which the resin particles are formed by using two or more types of resins as a polymer blend or a polymer alloy, and a case in which the resin particles are formed by forming a plurality of layers of two or more types of the resins. Further, as the resin component, one type of the resin particles may be used, or two or more types of the resin particles may be used in combination.

The white ink and the clear ink used in the present disclosure may contain other components in addition to the water, the titanium oxide particles, and the resin particles. Specifically, for example, the white ink and the clear ink may contain a water-soluble organic solvent as an auxiliary solvent like the pretreatment liquid, or may contain various additives. For example, in Examples to be described later, propylene glycol is contained as the water-soluble organic solvent.

Examples of the various additives include, but are not particularly limited to, a dispersant, a surfactant, a viscosity modifier, a defoaming agent, a preservative, a corrosion inhibitor, and a pH adjuster. A content of the other components is not particularly limited, and a content generally used in the field of an inkjet ink can be adopted.

A method for producing the white ink or the clear ink used in the present disclosure is not particularly limited. In the case of the white ink, similarly to the pretreatment liquid described above, the titanium oxide particles and the water as the essential components and the resin particles as suitable components may be blended at a predetermined ratio and stirred and mixed by a known method. The same applies to the clear ink except that the titanium oxide particles are not blended.

However, in the case of the white ink, since the titanium oxide particles are not dissolved in the water, as described above, the white ink is in a state of the dispersion or the suspension in which the fine particles of the titanium oxide particles are dispersed in the water. Therefore, as the precipitation property of the white ink is evaluated in Examples to be described later, when the white ink is left standing, the titanium oxide particles tend to precipitate. Therefore, in the method for producing the white ink, in order to enable good redispersion of the precipitated titanium oxide particles, a production method is preferably adopted that allows the titanium oxide particles to be even better dispersed in the water.

Specifically, examples thereof include a method in which a mill base is prepared by mixing the titanium oxide particles, the water, and the other components as necessary by a known method and thoroughly stirring a mixture, and the mill base is further dispersed using a paint shaker, a ball mill, a bead mill, an attritor, a sand mill, a horizontal media mill, a colloid mill, a roll mill, a homogenizer, an ultrasonic disperser, a stirring blade stirrer, a magnetic stirrer, or the like. In this production process, whether the titanium oxide particles are well dispersed in the obtained dispersion may be checked by, for example, a laser diffraction scattering method, or the obtained dispersion may be filtered in consideration of residual secondary particles or the like which are not sufficiently dispersed.

### [Base Material and Image Formation]

The base material to be subjected to the image formation in the image forming method according to the present disclosure is the cloth material as described above, and a specific type of the cloth material is not particularly limited, but representative examples thereof include a knitted fabric (knit) and a woven fabric (texture). A specific type of the knitted fabric is not particularly limited, and examples thereof include representative knitted fabrics such as plain knitting, waffle knitting, milling knitting, dappled weave, honeycomb mesh, and polyester mesh (mesh using a polyester material). A specific type of the woven fabric is not particularly limited, and examples thereof include representative woven fabrics such as plain weave, twill weave, and sateen weave.

A specific type of a fiber used for the cloth material is not particularly limited, but in the image forming method according to the present disclosure, suitable fibers include cotton, silk, hemp, rayon, acetate, nylon, polyester, and a mixture thereof, since at least the white image (or white image and color image) is heated to be fixed on the cloth material. In the present disclosure, among these, a cloth material made of polyester or a fiber containing polyester are particularly preferably used. In Examples to be described later, a polyester knitted fabric used for a commercially available T-shirt is used as the cloth material.

The method for forming the image on the cloth material by the inkjet method can be divided into a wet on dry method and a wet on wet method depending on the process. In the wet on dry method, the pretreatment liquid is applied to the cloth material which is the base material, the cloth material is then sufficiently dried, the white ink is applied to a region where the pretreatment liquid is applied to form the white image, and the cloth material is heated and dried to fix the white image to the cloth material. On the other hand, in the wet on wet method, the pretreatment liquid is applied to the cloth material which is the base material, the white image is formed by applying the white ink on the region where the pretreatment liquid is applied, without sufficiently drying the cloth material (as a state in which the cloth material is not dried to the same extent as a dry state of the cloth material in the wet on dry method), and the cloth material is heated and dried to fix the white image and the pretreatment liquid to the cloth material.

Both the wet on dry method and the wet on wet method have different characteristics, and any method can be appropriately selected according to various conditions such as a type of the cloth material, a shape of the cloth material, a type of the formed image, and a type of the ink. In the image forming method according to the present disclosure, the wet on wet method that does not involve heating can be adopted. In the present disclosure, the pretreatment liquid may also be heated if necessary.

The image forming method according to the present disclosure includes, a pretreatment liquid application step of applying, when the image is formed on the cloth material, an aqueous pretreatment liquid to the cloth material, and an image forming step of forming the image by ejecting the ink onto the cloth material by the ink jet method after the pretreatment liquid is applied. As described above, at least the white ink containing the titanium oxide particles having an average particle diameter of 20 nm or more and 200 nm or less is used as the ink. In such a white ink, although the titanium oxide particles which are the color material have high specific gravity, the particle diameter thereof is small, making the titanium oxide particles difficult to precipitate.

When the average particle diameter of the titanium oxide particles is decreased, the precipitation speed thereof can be decreased. However, as described above, when the average particle diameter of the titanium oxide particles is too small (for example, less than 10 nm), the whiteness of the formed white image tends to decrease.

In the white ink used in the ink jet method, titanium oxide particles having an average particle diameter of about 300 nm are generally used in many cases. According to Stokes theorem, the precipitation speed is proportional to the square of a particle size, so the larger the particle diameter, the easier the titanium oxide particles precipitate. The titanium oxide particles having a particle diameter of about 300 nm tend to be easily precipitated. Therefore, by using titanium oxide particles having an average particle diameter in a range of 20 nm to 200 nm, it is possible to prevent the precipitation of the titanium oxide particles while the whiteness is maintained.

However, when the base material to which the white ink is applied (image forming object or printing object) is the cloth material, the smaller the average particle diameter of the titanium oxide particles, the easier the titanium oxide particles penetrate into the cloth material in the thickness direction. In particular, when the average particle diameter of the titanium oxide particles is in a range of more than 10 nm and 200 nm or less, the titanium oxide particles more easily penetrate. When the titanium oxide particles are preferably aggregated on the base material, the white image having the good whiteness can be formed. Therefore, when the titanium oxide particles penetrate into the cloth material, the good white image cannot be formed.

Furthermore, it is found that in the case in which the base material is the cloth material and the average particle diameter of the titanium oxide particles is less than 300 nm, in particular, in the case in which the white ink is applied without heating the pretreatment liquid, the white image tends to peel off when the cloth material on which the white image is formed is pulled. In the present embodiment, the peeling of the white image is referred to as "peeling at the time of pulling" for convenience.

Examples of the cloth material on which the white image is formed include clothes such as a T-shirt, and therefore pulling force is inevitably applied when the cloth material is used. However, when the cloth material is pulled and the white image is peeled off, the color image formed on the white image is also greatly affected, and practicability of the cloth material as a cloth or the like is reduced. Therefore, it is necessary to avoid an occurrence of peeling at the time of pulling.

However, as a result of intensive studies performed by the inventors, as shown in Examples (particularly Comparative Example 3) to be described later, it is found that when an application amount (residual amount) of the pretreatment liquid is simply increased, on the contrary, the peeling at the time of pulling easily occurs. Therefore, in the image forming method according to the present disclosure, the pretreatment liquid is applied such that the application amount (residual amount) of the pretreatment liquid is not so large, more specifically, the residual amount is 20 mg/cm² or more and 150 mg/cm² or less. Accordingly, even when the white image is formed on the cloth material using the titanium oxide particles having the average particle diameter in the range of 20 nm to 200 nm, it is possible to effectively prevent the occurrence of the peeling at the time of pulling while the good whiteness is achieved.

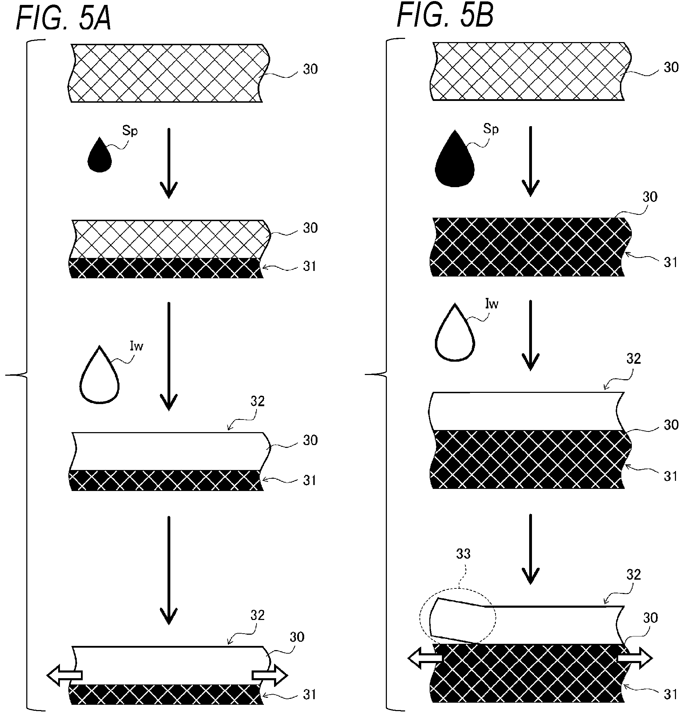

A mechanism of the occurrence of the peeling at the time of pulling will be described with reference to FIGS. 5A and 5B, for example. As illustrated in FIG. 5B, it is modeled that when the pretreatment liquid is applied to the cloth material 30 such that an excessive amount remains (in FIG. 5B, an application step is illustrated by a droplet shaped schematic figure Sp), the entire cloth material 30 is impregnated with the pretreatment liquid. When a state in which the cloth material 30 is impregnated with the pretreatment liquid is referred to as a "pretreatment liquid impregnation portion 31" for convenience, in the model illustrated in FIG. 5B, the entire cloth material 30 becomes the pretreatment liquid impregnation portion 31.

After that, when the white ink is applied to the cloth material 30 (in FIG. 5B, an application step is illustrated by a droplet shaped schematic figure Iw) to form the white image 32, since the entire cloth material 30 is the pretreatment liquid impregnation portion 31, the white image 32 is laminated on the cloth material 30 without almost impregnating the cloth material 30. As a result, it is considered that when pulling force as indicated by a block arrow in the figure is generated in the cloth material 30, peeling at the time of pulling 33 (indicated by a dotted line in the figure) is likely to occur in the white image 32.

On the other hand, as illustrated in FIG. 5A, it is assumed that when the pretreatment liquid is applied to the cloth material 30 such that a suitable amount remains (in FIG. 5A, an application step is illustrated by a schematic figure Sp smaller than that of FIG. 5B), the entire cloth material 30 does not become the pretreatment liquid impregnation portion 31, the pretreatment liquid is omnipresent on a surface opposite to the image forming surface in the cloth material 30, and an image forming surface side is not very impregnated with the pretreatment liquid.

Thereafter, when the white ink is applied to the cloth material 30 (in FIG. 5A, an application step is illustrated by a schematic figure Iw smaller than that of FIG. 5B), it is considered that the formed white image 32 is favorably entangled with the cloth material 30. As a result, even if pulling force as indicated by a block arrow in the figure is generated in the cloth material 30, the white image 32 is stably held, and the occurrence of the peeling at the time of pulling is avoided or prevented.

The image forming method according to the present disclosure includes a pretreatment liquid application step of applying at least the pretreatment liquid to the cloth material and an image forming step of forming the image on the cloth material with at least the white ink after the pretreatment liquid is applied. The method for applying the pretreatment liquid in the pretreatment liquid application step is not particularly limited, and as described above, the pretreatment liquid may be applied to the cloth material by a known pretreatment liquid application device or a pretreatment liquid application unit.

Here, in the present disclosure, it is important to adjust the residual amount of the pretreatment liquid remaining on the cloth material after the pretreatment liquid application step and before the image forming step. In the image forming method according to the present disclosure, since it is not necessary to heat the pretreatment liquid after the application (it is not necessary to perform a heating step of the pretreatment liquid), the residual amount of the pretreatment liquid can also be considered to be substantially the same as the application amount of the pretreatment liquid. Alternatively, the residual amount of the pretreatment liquid may be referred to as a "maintenance amount" of the pretreatment liquid maintained in the cloth material after the application.

As described above, the pretreatment liquid only needs to remain on the cloth material before the image forming step, and more specifically, a lower limit of the residual amount (application amount or maintenance amount) of the pretreatment liquid may be 20 mg/cm² or more, may be 30 mg/cm² or more, or may be 40 mg/cm² or more. Further, an upper limit of the residual amount of the pretreatment liquid may be 150 mg/cm² or less, may be 140 mg/cm² or less, or may be 130 mg/cm² or less.

Although the residual amount depends on various conditions, when the residual amount of the pretreatment liquid is less than 20 mg/cm², there is a possibility that the whiteness of the titanium oxide particles contained in the white ink in particular decreases in the image forming step. Further, if the cloth material which is the base material has high air permeability, when the residual amount of the pretreatment liquid is less than 20 mg/cm², a gap between fibers constituting the cloth material may not be satisfactorily filled.

When the residual amount of the pretreatment liquid exceeds 150 mg/cm², the peeling at the time of pulling is likely to occur. A specific range of the residual amount of the pretreatment liquid in the present embodiment may be 20 mg/cm² or more and 150 mg/cm² or less, and a more specific example of the residual amount is 40 mg/cm² or more and 130 mg/cm² or less.

In the image forming method according to the present disclosure, the image forming step may include at least forming the white image as the base layer using the white ink, and may further include forming the color image using the color ink on the white image. Both the white image formation and the color image formation may be performed by the ink jet method.

Among these image formations, in forming the white image as the base layer, the application amount of the white ink is not particularly limited.

The image forming method according to the present disclosure may include, in addition to the pretreatment liquid application step and the image forming step, a clear ink application step of applying the clear ink to the cloth material before the image forming step as described above. A method for applying the clear ink in the clear ink application step may be implemented by the inkjet method as in the case of the white ink or the color ink. For example, an application amount of the clear ink is not particularly limited, but for example, a lower limit of the application amount may be 3 mg/cm² or more, and an upper limit of the application amount may be 20 mg/cm² or less.

The clear ink application step may be performed before the image forming step, and a step order typically includes a step order in which the clear ink application step is performed after the pretreatment liquid application step. In Examples to be described later, the clear ink application step is performed after the pretreatment liquid application step (Examples 5 to 7 and 9 to 13). A purpose of applying the clear ink on the cloth material is to form a resin layer using the resin component contained in the clear ink. Therefore, when the clear ink application step is performed after the pretreatment liquid application step, a layer of the clear ink is formed on an upper side of the pretreatment liquid applied first.

The image forming step including the application of the white ink is performed after the clear ink application step, and layers of the pretreatment liquid, the clear ink, and the white image are laminated in this order on the surface of the cloth material. Accordingly, the penetration of the white ink into the cloth material is effectively prevented by the layer of the clear ink. As a result, the whiteness of the white image can be further improved.

However, in the present disclosure, the clear ink application step may not necessarily be performed after the pretreatment liquid application step as long as the clear ink application step is performed before the image forming step. For example, the pretreatment liquid application step may be performed after the clear ink application step is performed, and then the image forming step may be performed. In this case, although the previously applied clear ink penetrates into the cloth material, grains of the cloth material can be easily filled with clear ink. As long as a predetermined degree of whiteness can be obtained in the white image obtained by performing the pretreatment liquid application step after the clear ink application step, it is also possible to give priority to the filling and perform the clear ink application step first.

As described above, the image forming method according to the present disclosure may include the pretreatment liquid application step and the image forming step, and may also include the clear ink application step, but it goes without saying that the image forming method may further include other steps. For example, after first forming the white image and then forming the color image in the image forming step, a fixing step may be performed to fix these ink images to the cloth material, as described above. In the fixing step, a method of heating and fixing the cloth material on which the ink image is formed can be suitably used, but the method is not particularly limited. In this heating and fixing, for example, heat compression such as heat pressing can be performed similarly to the heating step of the pretreatment liquid described above.

As described above, the image forming method according to the present disclosure may include: the pretreatment liquid application step of applying the aqueous pretreatment liquid to the cloth material which is the absorbent base material; and the image forming step of forming the image by discharging the aqueous ink to the cloth material by the ink jet method after the pretreatment liquid application step, in which in the image forming step, the amount of the pretreatment liquid maintained in the cloth material is 20 mg/cm² or more and 150 mg/cm² or less, and the aqueous ink contains at least the white ink containing the titanium oxide particles having the average particle diameter of 20 nm or more and 200 nm or less.

According to the configuration, at the time of forming the image using the white ink, the amount of the pretreatment liquid maintained (remained) on the cloth material is set within the above range. In this state, when the white ink is discharged onto the cloth material which is the absorbent base material, the titanium oxide particles as the pigment component of the white ink can be prevented or avoided from penetrating into the cloth material in the thickness direction. Therefore, the titanium oxide particles can be easily positioned on the surface of the cloth material at the time of the image formation.

Therefore, it is possible to achieve better whiteness in the white image formed on the cloth material. Moreover, even when the cloth material on which the white image is formed is pulled, it is possible to effectively prevent the peeling of the white image from the cloth material.

Furthermore, since the white ink uses titanium oxide particles having a particle diameter of 200 nm or less as the pigment, the precipitation can be prevented more than a titanium oxide pigment having a normal particle diameter. Furthermore, by appropriately controlling the amount of the pretreatment liquid contained in the cloth material, it is possible to prevent the penetration into the cloth material in the thickness direction and physically fill the cloth material, and the component contained in the white ink can be aggregated well to suitably thicken the white ink. Further, when the titanium oxide particles are aggregated, aggregated particles of the titanium oxide particles can be relatively enlarged (the particle diameter can be increased). Accordingly, whiteness of the aggregated particles can be improved.

The image forming method according to the present disclosure may further include, before the image forming step, a clear ink application step of applying an aqueous clear ink that does not contain a color material but contains a resin component. At this time, the amount of the clear ink applied to the cloth material may be within a range of 3 mg/cm² to 20 mg/cm². By applying the clear ink, it is possible to further optimize the whiteness of the obtained white image and to fill the grains of the cloth material.

The present disclosure also includes the image forming system capable of performing the image forming method. That is, the image forming system according to the present disclosure may include: the pretreatment liquid application unit configured to apply the aqueous pretreatment liquid to the cloth material; and the image forming unit configured to form the image on the cloth material to which the pretreatment liquid is applied by discharging the aqueous ink by the ink jet method, in which the ink contains at least the white ink containing the titanium oxide particles having the average particle diameter of 20 nm or more and 200 nm or less, and the pretreatment liquid application unit applies the pretreatment liquid to the cloth material such that the amount of the pretreatment liquid maintained in the cloth material is 20 mg/cm² or more and 150 mg/cm² or less at the time of the image formation. The image forming system may be an image forming apparatus in which the pretreatment liquid application unit and the image forming unit are integrated. Further, the present disclosure includes the cloth material on which the image is formed by the above-described image forming method.

### [Examples]

The present invention will be described more specifically based on Examples and Comparative Examples, but the present invention is not limited thereto. Those skilled in the art can make various changes, corrections, and modifications without departing from the scope of the present disclosure.

Compositions of the pretreatment liquid, the white ink, and the clear ink, application conditions, and evaluations associated with the image formation in the following Examples and Comparative Examples are as follows.

### (Compositions of Pretreatment Liquid, White Ink, and Clear Ink)

The pretreatment liquid, the white ink, and the clear ink in each of Examples and Comparative Examples were prepared with compositions shown in Table 1. A unit of the composition shown in Table 1 is % by mass.

**[Table 1]**

| | Component | Content [mass%] |
|---|---|---|
| Pretreatment liquid | Formic acid | 2 |
| | Water | Residue |
| White ink | Titanium oxide particle | 10 |
| | Resin particle (urethane resin) | 15 (In terms of solid content) |
| | [Product name: ADEKA BONTIGHTER HUX564] | |
| | Propylene glycol | 10 |
| | Water | Residue |
| Clear ink | Resin particle (urethane resin) | 15 (In terms of solid content) |
| | (Product name: ADEKA BONTIGHTER HUX564] | |
| | Propylene glycol | 10 |
| | Water | Residue |

### (Average Particle Diameter of Pigment for White Ink)

An average particle diameter of a titanium oxide (TiO₂) pigment used in the white ink was determined by diluting the titanium oxide pigment such that a concentration of the pigment was 0.1% by mass, measuring scattered light intensity with a dynamic particle size distribution measuring device (product name LB-550, manufactured by HORIBA, Ltd.,), and calculating the average particle diameter by a photon correlation method based on the measured scattered light intensity.

### (Residual Amount of Pretreatment Liquid and Application Amount of Clear Ink)

In each of Examples and Comparative Examples, a mass of the cloth material (polyester knit) before the application of the pretreatment liquid or the clear ink was measured and set as a reference value M0, a mass of the cloth material after the application of the pretreatment liquid or the clear ink or after the application of the pretreatment liquid and before the application of the clear ink was measured and set as a measurement value M1, and the residual amount (application amount) of the pretreatment liquid and the application amount of the clear ink were evaluated by dividing a subtraction value M2 (M2 = M1 - M0) obtained by subtracting the reference value M0 from the measurement value M1 by an area Sa of the cloth material (M2/Sa).

### (Pigment Precipitation Property of White Ink)

Into a sample tube having an inner diameter of 15 mm was dispensed 10 mL of the white ink prepared in each of Examples or Comparative Examples, and the white ink was stored for one week at 25°C and then visually evaluated for a precipitation tendency. A case in which no precipitation was visually observed was evaluated as "AA", a case in which slight precipitation was observed was evaluated as "A", a case in which precipitation was clearly visible was evaluated as "B", and a case in which a very large amount of precipitation was observed was evaluated as "C".

### (Whiteness of White Image)

The white ink was applied to, at a concentration of 20 mg/cm², the cloth material to which the pretreatment liquid had been applied, and was heated at 100°C for 20 minutes to fix the white ink, thereby forming a white image. Brightness L* of the white image was measured using a spectral colorimeter (product name eXact, manufactured by X-Rite, Inc.) under conditions of a measurement field of view of 10°, a white reference Abs (absolute white), and a light source D65.

When L* is 85 or more (L* ≥ 85), the whiteness of the formed image was evaluated as "A+", when L* is 80 or more and less than 85 (80 ≤ L* < 85), the whiteness was evaluated as "A", when L* is 70 or more and less than 80 (70 ≤ L* < 80), the whiteness was evaluated as "B", when L* is 60 or more and less than 70 (60 ≤ L* < 70), the whiteness was evaluated as "C", when L* is 50 or more and less than 60 (50 ≤ L* < 60), the whiteness was evaluated as "D", and when L* is less than 50 (L* < 50), the whiteness was evaluated as "E".

### (Peeling at time of Pulling of White Image)

In each of Examples and Comparative Examples, an initial length of the cloth material on which the white image is formed is used as a reference (100%), and when the cloth material is pulled by a hand and the length thereof becomes 110% (length of cloth material at the time of observing peeling/length of initial cloth material × 100 = 110%), whether the white image is peeled off is visually evaluated.

The peeling of the white image is schematically illustrated in FIG. 5B as described above. A state in which the peeling was not visually observed in the white image was evaluated as "A", a state in which the peeling was visually observed in a part of the white image was evaluated as "B", and a state in which considerable peeling was visually observed in the white image was evaluated as "C", thereby evaluating the peeling at the time of pulling of the formed image.

### (Example 1)

As shown in Table 2, W1 having an average particle diameter of 200 nm is used as the titanium oxide (TiO₂) pigment for a white ink, and a pretreatment liquid and a white ink were prepared to contain compositions shown in Table 1. The precipitation property of the titanium oxide particles in the white ink was evaluated by the above-described method. A result thereof is shown in Table 2.

A commercially available plain polyester T-shirt (product name: Glimmer 300 ACT) cut into pieces was used as the cloth material. An evaluation sample according to Example 1 was prepared by placing this cloth material on glass, applying the pretreatment liquid in an application amount shown in Table 1, and leaving the cloth material to stand. An application amount of the pretreatment liquid after standing in the evaluation sample was adjusted such that a residual amount of the pretreatment liquid was 20 mg/cm² as shown in Table 2.

Thereafter, the white ink was applied to the evaluation sample according to Example 1 by spraying in an application amount of 20 mg/cm² in a manner of simulating application performed by the ink jet printer, and the white ink was fixed to the cloth material by heating at 100°C for 20 minutes. For a white image of the evaluation sample, whiteness and peeling at the time of pulling were evaluated by the above-described method. Results thereof are shown in Table 2.

### (Examples 2 to 4)

As shown in Table 2, white inks according to Examples 2 to 4 were prepared in the same manner as in Example 1 except for the following points. In Example 2, W2 having an average particle diameter of 150 nm was used as the titanium oxide particles. In Example 3, W3 having an average particle diameter of 120 nm was used. In Example 4, W4 having an average particle diameter of 50 nm was used. A precipitation property of each of the white inks was evaluated by the above-described method. A result thereof is shown in Table 2.

As shown in Table 2, evaluation samples according to Examples 2 to 4 were prepared using the white inks according to Examples 2 to 4 in the same manner as in Example 1. Whiteness and peeling at the time of pulling of a white image in each of the evaluation samples were evaluated by the above-described method. Results thereof are shown in Table 2.

### (Example 5)

As shown in Table 2, a white ink according to Example 5 was prepared using W3 having the average particle diameter of 120 nm as the titanium oxide particles (that is, in the same manner as in Example 3). A precipitation property of the white ink was evaluated by the above-described method. A result thereof is shown in Table 2.

Further, as shown in Table 2, an evaluation sample according to Example 5 was prepared in the same manner as in Example 1 except for the following points. In Example 5, after the application of the pretreatment liquid and before the application of the white ink, a clear ink (composition shown in Table 1) was applied by spraying in an application amount of 3 mg/cm² shown in Table 2. As described above, the application of the white ink is performed by simulating the application performed by the inkjet printer. Whiteness and peeling at the time of pulling of a white image in the evaluation sample were evaluated by the above-described method. Results thereof are shown in Table 2.

### (Examples 6 and 7)

As shown in Table 2, a white ink according to Example 6 or 7 was prepared in the same manner as in Example 3. A precipitation property of each of the white inks was evaluated by the above-described method. Results thereof are shown in Table 2.

By using the white ink according to Example 6 or 7, evaluation samples according to Example 6 or 7 were prepared in the same manner as in Example 5 except for the following points as shown in Table 2. In Example 6, an application amount of the clear ink (composition shown in Table 1) was 15 mg/cm². In Example 7, an application amount of the clear ink was 20 mg/cm² (Example 7). Whiteness and peeling at the time of pulling of a white image in each of the evaluation samples were evaluated by the above-described method. Results thereof are shown in Table 2.

### (Example 8)

As shown in Table 2, a white ink according to Example 8 was prepared in the same manner as in Example 3. A precipitation property of the white ink was evaluated by the above-described method. A result thereof is shown in Table 2.

An evaluation sample according to Example 8 was prepared in the same manner as in Example 1 except that the white ink according to Example 8 was used and the pretreatment liquid was applied such that the residual amount was 40 mg/cm² as shown in Table 2. Whiteness and peeling at the time of pulling of a white image in the evaluation sample were evaluated by the above-described method. Results thereof are shown in Table 2.

### (Examples 9 to 11)

As shown in Table 2, white inks according to Examples 9 to 11 were prepared in the same manner as in Example 3. A precipitation property of each of the white inks was evaluated by the above-described method. Results thereof are shown in Table 2.

By using these white inks according to Examples 9 to 11, evaluation samples according to Examples 9 to 11 were prepared in the same manner as in Example 8 except for the following points as shown in Table 2. After the application of the pretreatment liquid and before the application of the white ink, in Example 9, the application amount of the clear ink (composition shown in Table 1) was 3 mg/cm². In Example 10, the application amount of the clear ink was 15 mg/cm². In Example 11, the application amount of the clear ink was 20 mg/cm². Whiteness and peeling at the time of pulling of a white image in each of the evaluation samples were evaluated by the above-described method. Results thereof are shown in Table 2.

### (Examples 12 and 13)

As shown in Table 2, a white ink according to Example 12 or 13 was prepared in the same manner as in Example 3. A precipitation property of each of the white inks was evaluated by the above-described method. Results thereof are shown in Table 2.

By using the white ink according to Example 12 or 13, an evaluation sample according to Example 12 or 13 was prepared in the same manner as in Example 9 (the application amount of the clear ink was 3 mg/cm²) except for the following points as shown in Table 2. In Example 12, the pretreatment liquid was applied such that a residual amount was 130 mg/cm². In Example 13, the pretreatment liquid was applied such that a residual amount was 150 mg/cm². Whiteness and peeling at the time of pulling of a white image in each of the evaluation samples were evaluated by the above-described method. Results thereof are shown in Table 2.

### (Comparative Example 1)

A white ink according to Comparative Example 1 was prepared in the same manner as in Example 1 except that W6 having an average particle diameter of 10 nm was used as the titanium oxide particles as shown in Table 2. A precipitation property of the white ink was evaluated by the above-described method. A result thereof is shown in Table 2.

As shown in Table 2, an evaluation sample according to Comparative Example 1 was prepared in the same manner as in Example 1 using the white ink according to Comparative Example 1. Whiteness and peeling at the time of pulling of a white image in the evaluation sample were evaluated by the above-described method. Results thereof are shown in Table 2.

### (Comparative Examples 2 and 3)

As shown in Table 2, a white ink according to Comparative Example 2 or 3 was prepared in the same manner as in Example 3. A precipitation property of each of the white inks was evaluated by the above-described method. Results thereof are shown in Table 2.

By using the white ink according to Comparative Example 2 or 3, an evaluation sample according to Comparative Example 2 or 3 was prepared in the same manner as in Example 1 except for the following points as shown in Table 2. In Comparative Example 2, the pretreatment liquid was applied such that a residual amount of the pretreatment liquid was 5 mg/cm². In Comparative Example 3, the pretreatment liquid was applied such that a residual amount of the pretreatment liquid was 160 mg/cm². Whiteness and peeling at the time of pulling of a white image in each of the evaluation samples were evaluated by the above-described method. Results thereof are shown in Table 2.

**[Table 2]**

| Base material/condition/evaluation | | Example | | | | | | | | | | | | | Comparative Example | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 1 | 2 | 3 |
| Residual amount of pretreatment liquid [mg/cm²] | | 20 | 20 | 20 | 20 | 20 | 20 | 20 | 40 | 40 | 40 | 40 | 130 | 150 | 20 | 5 | 160 |
| TiOz particle for white ink | Type | W1 | W2 | W3 | W4 | W3 | W3 | W3 | W3 | W3 | W3 | W3 | W3 | W3 | W6 | W3 | W3 |
| | Average particle diameter [nm] | 200 | 150 | 120 | 50 | 120 | 120 | 120 | 120 | 120 | 120 | 120 | 120 | 120 | 10 | 120 | 120 |
| Application amount of clear ink [mg/cm²l | | - | - | - | - | 3 | 15 | 20 | - | 3 | 15 | 20 | 3 | 3 | - | - | - |
| Evaluation | Precipitation property | B | A | AA | AA | AA | AA | AA | AA | AA | AA | AA | AA | AA | A | A | A |
| | Whiteness | B | B | B | B | B+ | B+ | B+ | A | AA | AA | AA | AA | AA | C | C | AA |
| | Peeling at time of peeling | A | A | A | A | A | A | A | A | A | A | A | A | B | A | A | C |

### (Comparison of Examples and Comparative Examples)

As shown in Examples 1 to 13, in the image forming method according to the present disclosure, even when the white ink is prepared by using titanium oxide particles having an average particle diameter in the range of 20 nm to 200 nm, it is possible to achieve the good pigment precipitation property (property that the titanium oxide particles are difficult to precipitate), to achieve good whiteness in the formed white image, and to effectively prevent the occurrence of the peeling at the time of pulling in the white image.

In particular, when the average particle diameter of the titanium oxide particles is within the above-described range (Examples 1 to 4), the pigment precipitation property can be B or higher, the whiteness of the white image can also be B, and the peeling at the time of pulling of the white image can be A.

In the case in which the clear ink is applied before the application of the white ink (Examples 5 to 7), even if the application amount of the clear ink is changed, the whiteness of the white image can be B+, and the peeling at the time of pulling of the white image can be A.

Even if the residual amount of the pretreatment liquid is increased from 20 mg/cm² and is 150 mg/cm² or less (Examples 8 to 13), the whiteness of the white image can be A or AA, and the peeling at the time of pulling of the white image can be B or more. It is also found that when the clear ink is applied, better whiteness is obtained (Examples 8 and 9), and it can also be found that by optimizing the residual amount of the pretreatment liquid, the occurrence of the peeling at the time of pulling can be better prevented (Examples 9, 12, and 13).

On the other hand, it is found that when the average particle diameter of the titanium oxide particles is too small (Comparative Example 1), the whiteness of the white image decreases, and it is found that even if the residual amount of the pretreatment liquid is too small (Comparative Example 2), the whiteness of the white image decreases. Furthermore, it is found that when the residual amount of the pretreatment liquid is too large (Comparative Example 3), although the whiteness of the white image is improved, the peeling at the time of pulling tends to occur.

The present invention is not limited to the above embodiment, various changes are possible within the scope of claims, and embodiments obtained by combining technical means disclosed in the different embodiments and a plurality of variations as appropriate are also included in the technical scope of the present invention.

### INDUSTRIAL APPLICABILITY

The present invention can be widely and suitably used in the field of an image forming method for forming an image on a cloth material such as a knitted fabric or a woven fabric by an ink jet method.

## Claims

1. An image forming method for forming an image on a cloth material which is an absorbent base material, the image forming method comprising:
a pretreatment liquid application step of applying an aqueous pretreatment liquid to the cloth material; and
an image forming step of forming the image by discharging an aqueous ink onto the cloth material by an ink jet method after the pretreatment liquid application step,
wherein in the image forming step, the cloth material comprises the pretreatment liquid in an amount of 20 mg/cm² or more and 150 mg/cm² or less per unit area of the cloth material, and
wherein the aqueous ink contains at least a white ink containing titanium oxide particles having an average particle diameter of 20 nm or more and 200 nm or less.

2. The image forming method according to claim 1, further comprising:
before the image forming step, a clear ink application step of applying an aqueous clear ink that does not contain a color material but contains a resin component,
wherein an application amount of the clear ink per unit area of the absorbent base material is within a range of 3 mg/cm² to 20 mg/cm².

3. The image forming method according to claim 2,
wherein the clear ink application step is performed after the pretreatment liquid application step.

4. The image forming method according to claim 1 or 2,
wherein in the image forming step, prior to any heating treatment, the absorbent base material comprises the pretreatment liquid in an amount of 40 mg/cm² or more per unit area of the absorbent base material.

5. The image forming method according to claim 1 or 2,
wherein in the image forming step, prior to any heating treatment, the absorbent base material comprises the pretreatment liquid in the amount of 40 mg/cm² or more and 130 mg/cm² or less per unit area of the absorbent base material.

6. The image forming method according to claim 1 or 2,
wherein the titanium oxide particles have an average particle diameter of 150 nm or less.

7. The image forming method according to claim 1 or 2,
wherein the titanium oxide particles have an average particle diameter of 120 nm or less.

8. The image forming method according to claim 1 or 2,
wherein the titanium oxide particles have an average particle diameter of 50 nm or more and 120 nm or less.

9. The image forming method according to claim 2 or 3,
wherein the resin component contained in the clear ink comprises a resin particle.

10. The image forming method according to claim 1 or 2,
wherein the absorbent base material comprises a polyester.

11. The image forming method according to claim 1 or 2,
wherein the pretreatment liquid comprises an organic acid.

12. An image forming system comprising:
a pretreatment liquid application unit configured to apply an aqueous pretreatment liquid to a cloth material; and
an image forming unit configured to form an image by discharging an aqueous ink to the cloth material to which the pretreatment liquid is applied by an inkjet method,
wherein the aqueous ink contains at least a white ink containing titanium oxide particles having an average particle diameter of 20 nm or more and 200 nm or less, and
wherein the pretreatment liquid application unit applies the pretreatment liquid to the cloth material such that the cloth material comprises the pretreatment liquid in an amount of 20 mg/cm² or more and 150 mg/cm² or less per unit area of the cloth material at the time of the image formation.

13. The image forming system according to claim 12,
wherein the image forming unit applies, before the image is formed on the cloth material, an aqueous clear ink that does not contain a color material but contains a resin component to the cloth material, such that an application amount of the aqueous clear ink per unit area of the cloth material is in a range of 3 mg/cm² to 20 mg/cm².

14. A cloth material on which the image is formed by the image forming method according to any one of claims 1 to 3.
